# EUROPÄISCHE PATENTANMELDUNG

(11) **EP 4 461 583 A1**
(43) Veröffentlichungstag der Anmeldung: **13.11.2024**
(21) Anmeldenummer: 24173811.1
(22) Anmeldetag: 02.05.2024
(51) Int. Cl.: B60L 3/04, B60Q 1/50

(54) **VORRICHTUNG UND VERFAHREN ZUR DURCHFÜHRUNG EINER NOTABSCHALTUNG EINES HOCHVOLT-SYSTEMS EINES ELEKTRISCH ANGETRIEBENEN FAHRZEUGS**

(30) Priorität: 12.05.2023 DE 102023112639
(71) Anmelder: Daimler Truck AG, 70771 Leinfelden-Echterdingen (DE)
(72) Erfinder: Winterstein, Thomas, 70771 Leinfelden-Echterdingen (DE)

(57) **Zusammenfassung**

Die Erfindung betrifft eine Vorrichtung zur Durchführung einer Notabschaltung mindestens einer Hochvolt-Komponente (2, 3, 4, 6, 7, 8) eines Hochvolt-Systems eines elektrisch angetriebenen Fahrzeugs (1), umfassend mindestens einen Notausstieg mit einer Verglasung (10, 13), wobei in oder auf der Verglasung (10, 13) mindestens ein Sicherungsdraht (14) angeordnet ist, der dazu konfiguriert ist, bei Zerstörung der Verglasung (10, 13) unterbrochen zu werden, wobei die Vorrichtung dazu konfiguriert ist, bei unterbrochenem Sicherungsdraht (14) ein Abschaltsignal an mindestens eine der Hochvolt-Komponenten (2, 3, 4, 6, 7, 8) zu senden, um diese abzuschalten.

## Beschreibung

Die Erfindung betrifft eine Vorrichtung zur Durchführung einer Notabschaltung mindestens einer Hochvolt-Komponente eines Hochvolt-Systems eines elektrisch angetriebenen Fahrzeugs gemäß dem Oberbegriff des Anspruchs 1. Die Erfindung betrifft ferner ein Verfahren zur Durchführung einer Notabschaltung mindestens einer Hochvolt-Komponente eines Hochvolt-Systems eines elektrisch angetriebenen Fahrzeugs gemäß dem Oberbegriff des Anspruchs 10. Ferner betrifft die Erfindung ein elektrisch angetriebenes Fahrzeug gemäß dem Oberbegriff des Anspruchs 8.

In Omnibussen müssen gemäß UN-R 107 verschiedene Notausstiege vorgesehen sein, beispielsweise Notluken im Dach und/oder Boden. Bei Fahrzeugen mit elektrischem Antrieb können sich Hochvolt-Komponenten, beispielsweise ein Pantograph, direkt neben den Notausstiegen befinden. Der Pantograph ist normalerweise stromlos und nur im Ladefall mit einem Hochvoltsystem des Fahrzeugs verbunden. Es ist bekannt, Hochvolt-Komponenten bei einem Unfall durch eine Crash-Sensorik spannungsfrei zu schalten. Im Falle eines umgestürzten, auf der Seite liegenden Busses besteht die Möglichkeit, den Bus über die Heckscheibe und/oder über die Notluken zu evakuieren. Ersthelfer, Rettungskräfte und Unfallbeteiligte können sich dabei an allen Seiten des verunfallten Fahrzeugs bewegen. Zur Evakuierung müssen die Scheiben und/oder Notluken zerstört und/oder geöffnet werden. Dabei besteht das Risiko, dass keine Notabschaltung ausgelöst wurde, beispielsweise wegen einer Fehlfunktion. Die betreffenden Personen können durch eventuell freiliegende Hochvolt-Komponenten lebensgefährlich oder tödlich verletzt werden.

DE 10 2012 008 680 A1 beschreibt ein Fahrzeug, insbesondere Kraftfahrzeug, HybridFahrzeug oder Elektro-Fahrzeug, mit einer ersten Einrichtung, die zumindest ein Element aufweist, das bei Berührung durch einen Menschen eine für diesen gefährliche elektrische Spannung aufweisen kann, wobei die erste Einrichtung elektrisch mit einem Leiter verbunden ist, der eine Kleinspannung aufweist, und einer Unfallsensorik, die im Falle eines Unfalls ein Sensorsignal ausgibt. Bei Ausgabe des Sensorsignals kann das Element der ersten Einrichtung automatisch spannungsfrei geschaltet werden.

Der Erfindung liegt die Aufgabe zu Grunde, eine neuartige Vorrichtung und ein neuartiges Verfahren zur Durchführung einer Notabschaltung mindestens einer Hochvolt-Komponente eines Hochvolt-Systems eines elektrisch angetriebenen Fahrzeugs sowie ein neuartiges elektrisch angetriebenes Fahrzeug anzugeben.

Die Aufgabe wird erfindungsgemäß gelöst durch eine Vorrichtung zur Durchführung einer Notabschaltung mindestens einer Hochvolt-Komponente eines Hochvolt-Systems eines elektrisch angetriebenen Fahrzeugs mit den Merkmalen des Anspruchs 1, durch ein Verfahren zur Durchführung einer Notabschaltung mindestens einer Hochvolt-Komponente eines Hochvolt-Systems eines elektrisch angetriebenen Fahrzeugs mit den Merkmalen des Anspruchs 10 und durch ein elektrisch angetriebenes Fahrzeug mit den Merkmalen des Anspruchs 8.

Vorteilhafte Ausgestaltungen der Erfindung sind Gegenstand der Unteransprüche.

Es wird eine Vorrichtung zur Durchführung einer Notabschaltung mindestens einer Hochvolt-Komponente eines Hochvolt-Systems eines elektrisch angetriebenen Fahrzeugs vorgeschlagen. Erfindungsgemäß umfasst die Vorrichtung mindestens einen Notausstieg mit einer Verglasung, wobei in oder auf der Verglasung mindestens ein Sicherungsdraht angeordnet ist, der dazu konfiguriert ist, bei Zerstörung der Verglasung unterbrochen zu werden, wobei die Vorrichtung dazu konfiguriert ist, bei unterbrochenem Sicherungsdraht ein Abschaltsignal an mindestens eine der Hochvolt-Komponenten zu senden, um diese abzuschalten.

In einer Ausführungsform ist der Notausstieg als eine Notluke im Bereich eines Daches des Fahrzeugs angeordnet und/oder der Notausstieg ist als ein Heckfenster im Bereich eines Hecks des Fahrzeugs angeordnet.

In einer Ausführungsform ist die abzuschaltende Hochvolt-Komponente eine Batterie mit einem Relais oder einer Batterie-Abschalt-Einheit, die dazu konfiguriert ist, bei Empfang eines Abschaltsignals einen Stromkreis der Batterie in der Batterie zu trennen.

In einer Ausführungsform ist mindestens ein Hinweis zum Zerschlagen der Verglasung im Notfall, beispielsweise mindestens ein Symbol und/oder Text, auf oder in der Verglasung nach innen weisend und/oder nach außen weisend angeordnet.

In einer Ausführungsform ist mindestens eine Warnleuchte in der Nähe mindestens einer von außen zugänglichen Hochvoltkomponente angeordnet, die dazu konfiguriert ist, bei unter Hochspannung stehendem Hochvolt-System zu leuchten. Die Warnleuchte kann abgeschaltet werden, sobald das Hochvolt-System nicht mehr unter Hochspannung steht.

In einer Ausführungsform ist die Warnleuchte als ein beleuchtetes Zeichen mit mindestens einem Symbol und/oder Text ausgebildet, das an oder neben mindestens einem der Notausstiege und/oder einem Not-Aus-Schalter angeordnet ist und zum Leuchten nach außen und/oder nach innen konfiguriert ist.

In einer Ausführungsform ist die als ein beleuchtetes Zeichen ausgebildete Warnleuchte so konfiguriert, dass Text und/oder Symbole nur lesbar sind, wenn das Fahrzeug auf der Seite liegt.

Gemäß einem Aspekt der vorliegenden Erfindung wird ein elektrisch angetriebenes Fahrzeug mit einem Hochvolt-System, umfassend mindestens eine Hochvolt-Komponente und mindestens einen Notausstieg mit einer Verglasung vorgeschlagen, wobei das Fahrzeug eine Vorrichtung wie oben beschrieben aufweist.

In einer Ausführungsform ist im oder am elektrisch angetriebenen Fahrzeug mindestens eine der folgenden Hochvolt-Komponenten vorgesehen:
- eine Hochvolt-Leitung,
- eine Batterie,
- ein Pantograph oder eine Stromschiene,
- eine Antriebseinheit,
- ein Luft-Kompressor, und
- eine Ladesteckdose.

Gemäß einem Aspekt der vorliegenden Erfindung wird ein Verfahren zur Durchführung einer Notabschaltung mindestens einer Hochvolt-Komponente eines Hochvolt-Systems eines elektrisch angetriebenen Fahrzeugs vorgeschlagen. Erfindungsgemäß ist mindestens ein Notausstieg mit einer Verglasung vorgesehen, wobei in oder auf der Verglasung mindestens ein Sicherungsdraht angeordnet ist, der bei Zerstörung der Verglasung unterbrochen wird, wobei bei unterbrochenem Sicherungsdraht ein Abschaltsignal an mindestens eine der Hochvolt-Komponenten gesendet wird, um diese abzuschalten.

Die Verglasung kann beispielsweise aus Sicherheitsglas gebildet sein.

Die Notausstiege können farblich markiert sein, beispielsweise durch Einrahmen mit einer Signalfarbe, beispielsweise rot.

Die als ein beleuchtetes Zeichen ausgebildete Warnleuchte kann in die Verglasung integriert oder daran angeordnet sein.

Darüber hinaus kann das Fahrzeug einen nicht dargestellten Not-Aus-Schalter im Bereich eines Fahrersitzes und/oder einen seitlich angeordneten Not-Aus-Schalter (nicht dargestellt) für Rettungskräfte aufweisen.

Die vorliegende Erfindung schlägt vor, mindestens einen Sicherheitsdraht und/oder mindestens eine aufgedampfte Leitung in die Notluken und/oder Scheiben des Fahrzeugs einzubringen. Bei Aktivierung, insbesondere Öffnung oder Zerstörung der Scheibe oder Notluke wird auch der Sicherheitsdraht oder die Leitung zerstört. Dies kann als Signalisierung für eine Schnell-Abschaltung des Hochvolt-Systems verwendet werden. Somit erfolgt eine Notabschaltung des Hochvolt-Systems bei Verwendung des Notausstieges. Zusätzlich kann ein Stromkreis, dessen Teil der Sicherheitsdraht sein kann, für eine in die Scheibe integrierte, nach innen und/oder außen weisende Signalgebung und/oder Leuchte verwendet werden. Dadurch erkennen Passagiere des Fahrzeugs (von innen) und Ersthelfer (von außen), dass diese Scheibe im Notfall zerstört werden soll. Auch von außen besteht die Möglichkeit, mittels eines schweren Gegenstandes (beispielsweise eines Steins), die Scheibe zu zerstören und so eine Notabschaltung des Hochvolt-Systems auszulösen, falls diese noch nicht durch andere Systeme erfolgt ist.

Die vorliegende Erfindung eignet sich insbesondere für Busse, jedoch auch für Nutzfahrzeuge oder Personenkraftwagen, gegebenenfalls in abgewandelter Form. Solch eine Signalgebung inkl. Scheibe könnte man auch für definierte Scheiben beim PKW (z.B. Heckscheibe) und Truck (z.B. Seitenscheiben) verwenden.

Ausführungsbeispiele der Erfindung werden im Folgenden anhand von Zeichnungen näher erläutert.

Dabei zeigen:
- Fig. 1: eine schematische Ansicht eines elektrisch angetriebenen Fahrzeugs, insbesondere eines Busses, mit einem Hochvolt-System,
- Fig. 2: eine schematische Ansicht einer Notluke,
- Fig. 3: eine schematische Ansicht eines Hecks des Fahrzeugs mit einem Heckfenster, das als Hecknotausstieg konfiguriert ist,
- Fig. 4: eine schematische Ansicht eines auf der Seite liegenden Fahrzeugs,
- Fig. 5: eine schematische Ansicht der Notluke, an der eine als ein beleuchtetes Zeichen ausgebildete Warnleuchte angeordnet ist, und
- Fig. 6: eine weitere schematische Ansicht der Notluke.

Einander entsprechende Teile sind in allen Figuren mit den gleichen Bezugszeichen versehen.

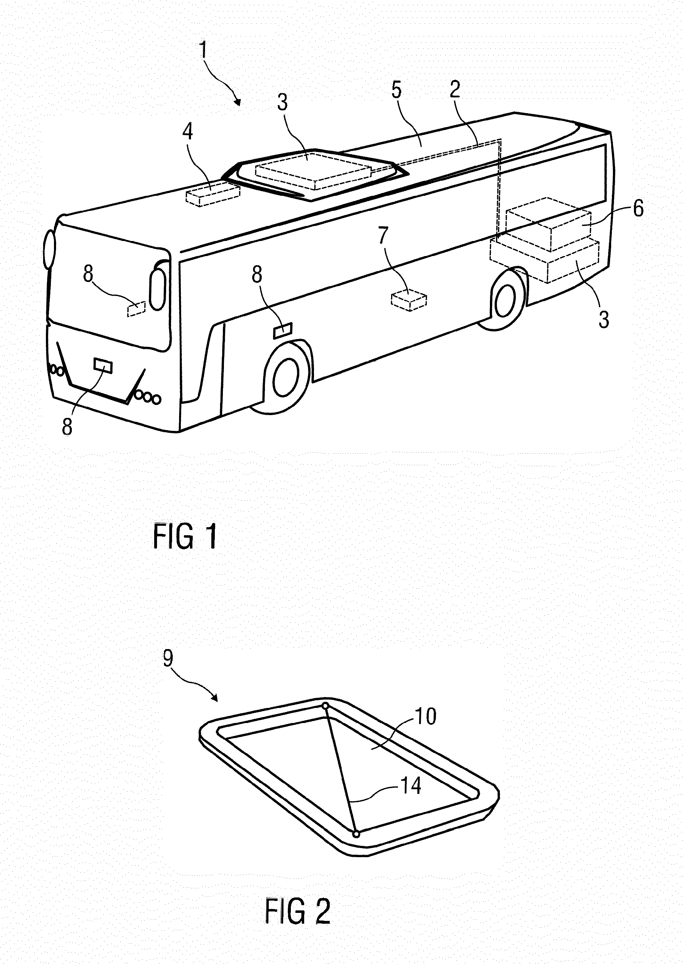

Figur 1 ist eine schematische Ansicht eines elektrisch angetriebenen Fahrzeugs 1, insbesondere eines Busses. Das Fahrzeug 1 weist ein Hochvolt-System mit Hochvolt-Komponenten 2, 3, 4, 6, 7, 8 auf, umfassend Hochvolt-Leitungen 2, ein, zwei oder mehr Batterien 3 und einen Pantographen 4 und/oder eine Stromschiene im Bereich eines Daches 5 des Fahrzeugs 1, eine Antriebseinheit 6 und eine weitere Batterie 3 im Bereich eines Hecks 11 des Fahrzeugs 1, einen Luft-Kompressor 7 und ein, zwei, drei oder mehr Ladesteckdosen 8. Es können weitere Hochvolt-Komponenten 2, 3, 4, 6, 7, 8 vorgesehen sein, beispielsweise ein Heizgerät (nicht dargestellt).

Bei einem Unfall oder Notfall ist eine Notabschaltung des Hochvolt-Systems vorgesehen, bei der ein Stromkreis der Batterie 3 in der Batterie 3 getrennt wird, nachdem die Batterie 3 ein Auslösesignal für Not-Aus erhalten hat.

Dieses Auslösesignal kann automatisiert, teilautomatisiert und/oder manuell erzeugt werden.

Die Notabschaltung reagiert beispielsweise innerhalb von 5 ms bis 5 s und trennt mittels eines Relais oder einer Batterie-Abschalt-Einheit (beispielsweise Breaktor^{®}) die Batterie 3 von ihren Anschlussklemmen. Die Batterie 3 gibt dann keinen Strom mehr ans Fahrzeug 1 ab und erzeugt keine Spannung im Hochvolt-System, so dass dessen Hochvolt-Komponenten 2, 3, 4, 6, 7, 8 keine Gefahr durch Hochspannung mehr darstellen. Die Batterie 3 ist in diesem Zustand außerhalb eines Gehäuses der Batterie 3 und an ihren Anschlussklemmen stromlos und spannungsfrei. Das Fahrzeug 1 erfährt dadurch keinen Vortrieb mehr, die Lenkung und die Bremsen sind davon jedoch nicht betroffen, da deren Notlaufeigenschaften durch so ein Ereignis nicht beeinflusst werden dürfen. Das Fahrzeug 1 kann daher weiterhin sicher zum Stillstand gebracht werden. Im Servicefall muss eine Elektrofachkraft die Spannungsfreiheit der Batterie 3 prüfen. Dies ist bei Unfällen jedoch nicht umsetzbar.

Figur 2 ist eine schematische Ansicht einer Notluke 9, von denen eine oder mehrere insbesondere im Bereich des Daches 5 des Fahrzeugs 1 angeordnet sein kann. Die Notluke 9 weist eine Verglasung 10 auf, die aus Sicherheitsglas gebildet sein kann.

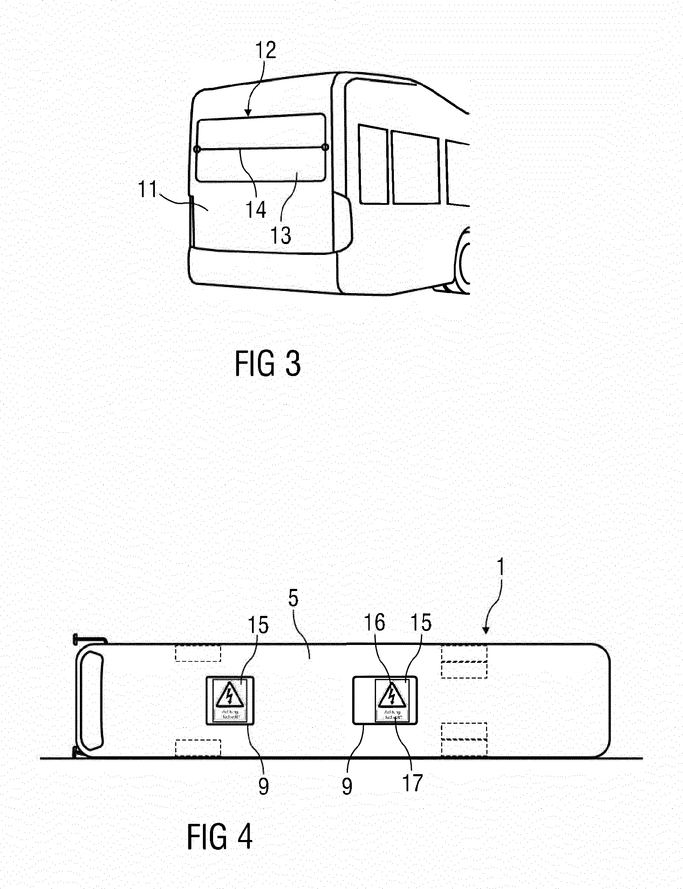

Figur 3 ist eine schematische Ansicht des Hecks 11 des Fahrzeugs 1 mit einem Heckfenster 12, das als Hecknotausstieg dienen kann, insbesondere als zentraler Notausstieg bei umgestürztem Fahrzeug 1. Das Heckfenster 12 weist eine Verglasung 13 auf, die aus Sicherheitsglas gebildet sein kann.

Die Notluke 9 oder das Heckfenster 12 kann beispielsweise durch Zerschlagen der Verglasung 10, 13 mittels eines Nothammers geöffnet werden.

In oder auf der Verglasung 10, 13 der Notluke 9 und/oder des Heckfensters 12 kann mindestens ein Sicherungsdraht 14 eingebracht oder aufgebracht sein, ähnlich wie ein Heizdraht bei einer Heckscheibenheizung.

Bei umgestürztem Fahrzeug 1 können sich die Passagiere beispielsweise durch das Heckfenster 12 und/oder die mindestens eine Notluke 9 selbst evakuieren, indem sie deren Verglasung 10, 13 zerstören. Dabei wird der Sicherungsdraht 14 durchtrennt und somit ein Stromkreis unterbrochen, wodurch die Notabschaltung aktiviert wird.

Ebenso würde bei Zerstörung der Verglasung 10, 13 von außen, beispielsweise durch Rettungskräfte, der Sicherungsdraht 14 durchtrennt und die Notabschaltung aktiviert. Die durch die Heckfenster 12 und/oder die mindestens eine Notluke 9 gebildeten Notausstiege werden somit zu Not-Aus-Schaltern. Darüber kann das Fahrzeug 1 einen nicht dargestellten Not-Aus-Schalter im Bereich eines Fahrersitzes und/oder seitlich angeordnete Not-Aus-Schalter (nicht dargestellt) für Rettungskräfte aufweisen.

Zusätzlich kann vorgesehen sein, mindestens einen Hinweis, beispielsweise mindestens ein Symbol 16 und/oder Text 17 (dargestellt in Figur 4), auf die Verglasung 10, 13 aufzubringen, die dazu auffordert, die Verglasung 10, 13 in einem Hochvolt-Notfall einzuschlagen. Solche Hinweise können nach innen weisend und/oder nach außen weisend an der Verglasung 10, 13 angebracht sein. Darüber hinaus können die Notausstiege farblich markiert werden, beispielsweise durch Einrahmen mit einer Signalfarbe, beispielsweise rot.

Figur 4 ist eine schematische Ansicht eines auf der Seite liegenden Fahrzeugs 1, beispielsweise eines Busses. Im Bereich des Daches 5 sind ein, zwei oder mehr Notluken 9 wie oben beschrieben angeordnet.

Es kann vorgesehen sein, dass mindestens eine Warnleuchte 15 in der Nähe von außen zugänglichen Hochvoltkomponenten 2, 3, 4, 6, 7, 8, beispielsweise auf dem Dach 5, angeordnet ist, die dazu konfiguriert ist, bei unter Hochspannung stehendem Hochvolt-System zu leuchten. Nach einem Unfall ist so ersichtlich, ob noch Hochspannung anliegt oder ob die Notabschaltung betätigt wurde.

In einer Ausführungsform ist die Warnleuchte 15 als ein beleuchtetes Zeichen mit mindestens einem Symbol 16 und/oder Text 17 ausgebildet, das an oder neben der Notluke 9 und/oder dem Heckfenster 12 und/oder einem anderen Not-Aus-Schalter angeordnet sein kann. Beispielsweise kann die als ein beleuchtetes Zeichen ausgebildete Warnleuchte 15 in die Verglasung 10, 13 integriert oder daran angeordnet sein. Wenn diese durch einen Unfall, beispielsweise einen Überschlag, zerstört wird, dann wird die Notabschaltung aktiviert. Dabei kann die als ein beleuchtetes Zeichen ausgebildete Warnleuchte 15 zum Leuchten nach außen und/oder nach innen konfiguriert sein.

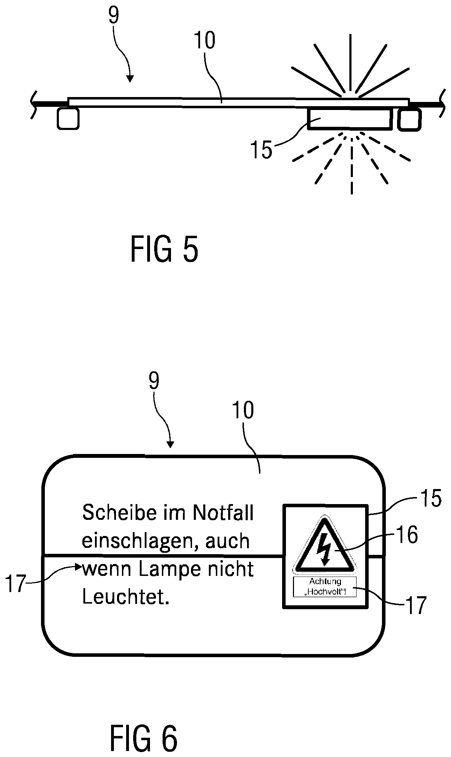

Figuren 5 und 6 zeigen schematische Ansichten der Notluke 9, an der die als ein beleuchtetes Zeichen ausgebildete Warnleuchte 15 angeordnet ist.

Die als ein beleuchtetes Zeichen ausgebildete Warnleuchte 15 kann so konfiguriert sein, dass Text 17 und/oder Symbole 16 nur lesbar sind, wenn das Fahrzeug 1 auf der Seite liegt, beispielsweise indem Text 17 und/oder Symbole 16 durch eine transparente, abschaltbare LCD-Anzeige dargestellt werden, die nur dann eingeschaltet wird, wenn ein im Fahrzeug 1 angeordneter Neigungssensor detektiert hat, dass das Fahrzeug 1 auf der Seite liegt. Auf diese Weise wird das Risiko für eine ungewollte Fehlbedienung verringert.

### Bezugszeichenliste

- 1: Fahrzeug
- 2: Hochvolt-Komponente, Hochvolt-Leitungen
- 3: Hochvolt-Komponente, Batterie
- 4: Hochvolt-Komponente, Pantograph
- 5: Dach
- 6: Hochvolt-Komponente, Antriebseinheit
- 7: Hochvolt-Komponente, Luft-Kompressor
- 8: Hochvolt-Komponente, Ladesteckdose
- 9: Notluke
- 10: Verglasung
- 11: Heck
- 12: Heckfenster
- 13: Verglasung
- 14: Sicherungsdraht
- 15: Warnleuchte
- 16: Symbol
- 17: Text

## Patentansprüche

1. Vorrichtung zur Durchführung einer Notabschaltung mindestens einer Hochvolt-Komponente (2, 3, 4, 6, 7, 8) eines Hochvolt-Systems eines elektrisch angetriebenen Fahrzeugs (1),
**gekennzeichnet durch** mindestens einen Notausstieg mit einer Verglasung (10, 13), wobei in oder auf der Verglasung (10, 13) mindestens ein Sicherungsdraht (14) angeordnet ist, der dazu konfiguriert ist, bei Zerstörung der Verglasung (10, 13) unterbrochen zu werden, wobei die Vorrichtung dazu konfiguriert ist, bei unterbrochenem Sicherungsdraht (14) ein Abschaltsignal an mindestens eine der Hochvolt-Komponenten (2, 3, 4, 6, 7, 8) zu senden, um diese abzuschalten.

2. Vorrichtung nach Anspruch 1,
**dadurch gekennzeichnet, dass** der Notausstieg als eine Notluke (9) im Bereich eines Daches (5) des Fahrzeugs (1) angeordnet ist und/oder dass der Notausstieg als ein Heckfenster (12) im Bereich eines Hecks (11) des Fahrzeugs (1) angeordnet ist.

3. Vorrichtung nach einem der vorhergehenden Ansprüche,
**dadurch gekennzeichnet, dass** die abzuschaltende Hochvolt-Komponente (2, 3, 4, 6, 7, 8) eine Batterie (3) mit einem Relais oder einer Batterie-Abschalt-Einheit ist, die dazu konfiguriert ist, bei Empfang eines Abschaltsignals einen Stromkreis der Batterie (3) in der Batterie (3) zu trennen.

4. Vorrichtung nach einem der vorhergehenden Ansprüche,
**dadurch gekennzeichnet, dass** mindestens ein Hinweis zum Zerschlagen der Verglasung (10, 13) im Notfall, beispielsweise mindestens ein Symbol (16) und/oder Text (17), auf oder in der Verglasung (10, 13) nach innen weisend und/oder nach außen weisend angeordnet ist.

5. Vorrichtung nach einem der vorhergehenden Ansprüche,
**dadurch gekennzeichnet, dass** mindestens eine Warnleuchte (15) in der Nähe mindestens einer von außen zugänglichen Hochvoltkomponente (2, 3, 4, 6, 7, 8) angeordnet ist, die dazu konfiguriert ist, bei unter Hochspannung stehendem Hochvolt-System zu leuchten.

6. Vorrichtung nach Anspruch 5,
**dadurch gekennzeichnet, dass** die Warnleuchte (15) als ein beleuchtetes Zeichen mit mindestens einem Symbol (16) und/oder Text (17) ausgebildet ist, das an oder neben mindestens einem der Notausstiege und/oder einem Not-Aus-Schalter angeordnet ist und zum Leuchten nach außen und/oder nach innen konfiguriert ist.

7. Vorrichtung nach Anspruch 6,
**dadurch gekennzeichnet, dass** die als ein beleuchtetes Zeichen ausgebildete Warnleuchte (15) so konfiguriert ist, dass Text (17) und/oder Symbole (16) nur lesbar sind, wenn das Fahrzeug (1) auf der Seite liegt.

8. Elektrisch angetriebenes Fahrzeug (1) mit einem Hochvolt-System, umfassend mindestens eine Hochvolt-Komponente (2, 3, 4, 6, 7, 8) und mindestens einen Notausstieg mit einer Verglasung (10, 13),
**gekennzeichnet durch** eine Vorrichtung nach einem der vorhergehenden Ansprüche.

9. Elektrisch angetriebenes Fahrzeug (1) nach Anspruch 8,
**dadurch gekennzeichnet, dass** mindestens eine der folgenden Hochvolt-Komponenten (2, 3, 4, 6, 7, 8) vorgesehen ist:
- eine Hochvolt-Leitung (2),
- eine Batterie (3),
- ein Pantograph (4) oder eine Stromschiene,
- eine Antriebseinheit (6),
- ein Luft-Kompressor (7), und
- eine Ladesteckdose (8).

10. Verfahren zur Durchführung einer Notabschaltung mindestens einer Hochvolt-Komponente (2, 3, 4, 6, 7, 8) eines Hochvolt-Systems eines elektrisch angetriebenen Fahrzeugs (1), umfassend mindestens einen Notausstieg mit einer Verglasung (10, 13),
**dadurch gekennzeichnet, dass** in oder auf der Verglasung (10, 13) mindestens ein Sicherungsdraht (14) angeordnet ist, der bei Zerstörung der Verglasung (10, 13) unterbrochen wird, wobei bei unterbrochenem Sicherungsdraht (14) ein Abschaltsignal an mindestens eine der Hochvolt-Komponenten (2, 3, 4, 6, 7, 8) gesendet wird, um diese abzuschalten.
